# EUROPÄISCHE PATENTSCHRIFT

(11) **EP 2 115 859 B1**
(45) Veröffentlichungstag und Bekanntmachung des Hinweises auf die Patenterteilung: **19.07.2017**
(21) Anmeldenummer: 07847557.1
(22) Anmeldetag: 30.11.2007
(51) Int. Cl.: H02K 7/08, F16C 17/08

(54) **GETRIEBE-ANTRIEBSEINHEIT, SOWIE VERFAHREN ZUR HERSTELLUNG EINER SOLCHEN**
GEARBOX DRIVE UNIT, AND METHOD FOR PRODUCING A GEARBOX DRIVE UNIT
UNITÉ D'ENTRAÎNEMENT À ENGRENAGE ET PROCÉDÉ DE FABRICATION DE CELLE-CI

(30) Priorität: 28.12.2006 DE 102006061700
(43) Veröffentlichungstag der Anmeldung: 11.11.2009
(73) Patentinhaber: Robert Bosch GmbH, 70442 Stuttgart (DE)
(72) Erfinder: OBERLE, Hans-Juergen, 76437 Rastatt (DE); SCHWENDEMANN, Franz, 77833 Ottersweier (DE)
(86) Internationale Anmeldenummer: PCT/EP2007/063041
(87) Internationale Veröffentlichungsnummer: WO 2008/080716

(56) Entgegenhaltungen:
- EP-A- 0 798 843
- WO-A-2004/061329
- DE-A1- 3 804 219
- DE-A1- 10 242 570
- US-A- 4 452 541

## Beschreibung

### Stand der Technik

Die Erfindung betrifft eine Getriebe-Antriebseinheit, sowie ein Verfahren zur Herstellung einer solchen, mit einer Ankerwelle, die über ein Anlaufelement an einem Gehäuseteil anliegt, nach der Gattung der unabhängigen Ansprüche.

Mit der DE 102 59 957 A1 ist eine Getriebe-Antriebseinheit bekannt geworden, bei der die Ankerwelle eines Elektromotors über eine Anschlagscheibe gegenüber dem Getriebegehäuse abgestützt ist. Die Anlaufscheibe wird ebenso wie ein Dämpfungsgummi radial in das Getriebegehäuse eingefügt, und beispielsweise durch den Deckel des Getriebegehäuses fixiert. Soll nun an Stelle eines einstufigen Getriebes ein mehrstufiges Getriebe verwendet werden, bei dem Getriebe-Bauteile mit der Anlaufscheibe räumlich überlappen, kann sich die Anlaufscheibe und das Dämpfungselement während des Betriebs lösen und mit den Getriebe-Bauteilen kollidieren.

Mit der DE 102 42 570 A1 ist eine elektromotorische Antriebseinheit bekannt geworden, bei der eine Ankerwelle in einem Gehäuse axial abgestützt wird. Am Ende der Ankerwelle ist hier zumindest einen Ringnut ausgeformt, in die ein U-förmiges Anlaufelement eingreift. Das Anlaufelement weist Fortsätze auf, auf denen O-Ringe befestigt sind, die in entsprechende Aussparungen im Gehäuse eingepresst werden.

Mit der EP 0 798 843 A1 ist eine Anordnung zur Einstellung eines Axialspiels einer Welle bekannt geworden, bei der an der axialen Stirnseite der Ankerwelle ein Anlaufteil angeordnet ist. Das Rastteil wird hierbei auf einem gehäusefesten Drehzapfen-Nasenring verrastet.

### Offenbarung der Erfindung

### Vorteile der Erfindung

Die erfindungsgemäße Vorrichtung sowie das erfindungsgemäße Herstellungsverfahren mit den Merkmalen der unabhängigen Ansprüche haben demgegenüber den Vorteil, dass durch die Ausbildung eines separaten Befestigungselements die Anlaufscheibe auch dann radial fest fixiert werden kann, wenn über der Anlaufscheibe innerhalb des Getriebegehäuses ein freier Bauraum für Getriebebauteile, wie beispielsweise Getriebe-Zahnräder zur Verfügung gestellt
werden soll. Hierbei kann sowohl die Anlaufscheibe, das Dämpfungsmittel, das separate Befestigungselement und die Getriebe-Bauteile alle radial in das Getriebegehäuse montiert werden wodurch der Montageprozess deutlich vereinfacht wird. Erfindungsgemäß wird das Befestigungselement als Spannscheibe ausgebildet, da dann das Befestigungselement ohne zusätzliche Verbindungsmittel oder Befestigungsverfahren direkt mit dem Prozess des radialen Einfügens in das Getriebegehäuse in diesem zuverlässig fixiert wird. Erfindungsgemäß stützt sich das Befestigungselement mittels Federelemente aus Gehäuseteil ab. Am Befestigungselement können sehr einfach Federelemente angeformt werden, die das Befestigungselement beim radialen Einfügen in das Gehäuseteil in diesem verspannen. Hierzu weist das Befestigungselement beispielsweise an einem äußeren Umfang oder an einer zentralen Aussparung elastisch federnde Bereiche auf.

Durch die in den Unteransprüchen aufgeführten Merkmale sind vorteilhafte Weiterbildungen der Vorrichtung nach den unabhängigen Ansprüchen möglich.

Besonders günstig ist es, wenn das Befestigungsmittel zusammen mit dem Anlaufelement auch gleichzeitig das radial montierbare Dämpfungsmittel zuverlässig in seiner radialen Position fixiert.

Weist das Befestigungselement eine zentrale Öffnung auf, kann diese einfach bei der radialen Montage über einen entsprechend ausgerichteten Zapfen am Getriebegehäuse geschoben werden, so dass sich das Befestigungselement nach Art einer speed nut auf dem Gehäusezapfen festklemmt.

Dazu ist der Zapfen vorteilhaft direkt neben der Anlaufscheibe und/oder dem Dämpfungsmittel im Getriebegehäuse angeformt, beispielsweise einstückig mittels Kunststoff-Spritzgießen. Dabei ragt das Befestigungselement so weit über die Anlaufscheibe und das Dämpfungsmittel, dass diese vorzugsweise zu einem wesentlichen Teil mit dem separaten Befestigungselement überlappen.

Besonders vorteilhaft weist das Dämpfungselement eine zylindrische Form auf, das mit seiner Zylinderachse quer zur Ankerwelle ausgerichtet ist. Ist ein solches zylindrisches Dämpfungselement in einer näherungsweise eckigen Aussparung des Gehäuses eingefügt, kann sich das Dämpfungselement bei einer axialen Belastung noch ausreichend umformen. Dadurch kann über die gesamte Lebensdauer der Getriebe-Antriebseinheit eine ausreichende Axialspiel-Dämpfung erzielt werden, bei der auch axiale Stöße dynamisch abgefedert werden.

Um ein radiales Ausweichen der Ankerwelle im Bereich ihrer Schnecke zu verhindern, ist es von Vorteil, das Anlaufelement geneigt zur Ankerwelle anzuordnen. Dafür eignet sich beispielsweise ein Winkel von 75 bis 85° gegenüber der Ankerwelle, wobei das Anlaufelement unabhängig vom Neigungswinkel tangential an der Zylindermantelfläche des Dämpfungselements anliegt.

Eine solche erfindungsgemäße radiale Fixierung des Anlaufelements und des Dämpfungsmittels eignet sich besonders für eine Getriebe-Antriebseinheit, bei der Getriebe-Bauteile in einer Ebene quer zur radialen Montagerichtung mit dem Anlaufelement überlappen. Durch das separate Befestigungselement kann somit dieser Bauraum über der Anlaufscheibe völlig unabhängig von dessen radialer Fixierung genützt werden.

Die Getriebe-Bauteile, die mit dem Anlaufelement überlappen, können beispielsweise mittels eines Deckels, der die Getriebe-Bauteile im Getriebegehäuse einschließt, gelagert werden.

Durch das erfindungsgemäße Herstellungsverfahren der Getriebe-Antriebseinheit können praktisch alle Komponenten radial in das Getriebegehäuse eingefügt werden. Dabei werden zuerst das Dämpfungselement und die Anlaufscheibe radial montiert und mit dem separat ausgebildeten Befestigungselement radial fixiert. Anschließend werden die Getriebe-Bauteile ebenfalls radial in das Getriebegehäuse eingefügt und mit einem Deckel verschlossen.

### Kurze Beschreibung der Zeichnungen

Ausführungsbeispiele der Erfindung sind in den Zeichnungen dargestellt und in der nachfolgenden Beschreibung näher erläutert. Es zeigen:
- Fig. 1: einen Schnitt einer erfindungsgemäßen Getriebe-Antriebseinheit und
- Fig. 2: eine Draufsicht auf eine weitere erfindungsgemäße Getriebe-Antriebseinheit.

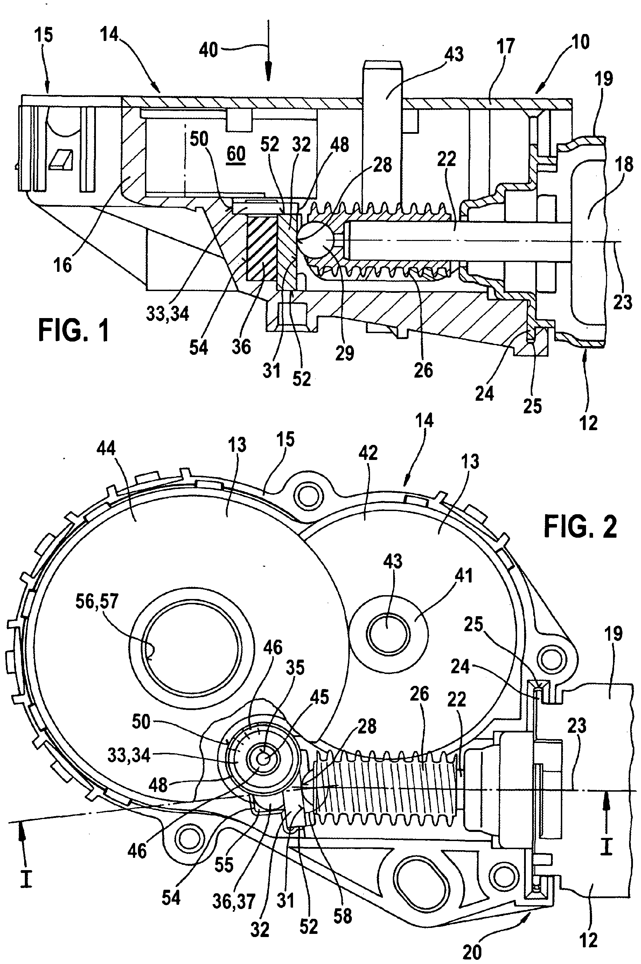

In Fig. 1 ist eine Getriebe-Antriebseinheit 10 mit einem Elektromotor 12 dargestellt (ohne eingesetzte Getriebezahnräder), der mit einer Ankerwelle 22 in ein Gehäuseteil 16 eines Getriebes 14 ragt. Auf der Ankerwelle 22 ist ein Ankerpaket 18 innerhalb eines Polgehäuses 19 angeordnet. Das Polgehäuse 19 bildet eine Schnittstelle 20 zum Getriebegehäuse 15, wobei der Elektromotor 12 beispielsweise radiale Fortsätze 24 aufweist, die in entsprechende Gegenaufnahmen 25 des Getriebegehäuses 15 eingreifen. Dadurch kann der Elektromotor 12 in Montagerichtung 40 radial zur Achsrichtung 23 der Ankerwelle 22 in das Gehäuseteil 16 eingefügt werden. Auf der Ankerwelle 22 ist eine Schnecke 26 angeordnet, die mit einem ersten Getriebezahnrad 42 kämmt, das auf einem gehäusefesten Bolzen 43 gelagert ist. Die Ankerwelle 22 liegt mit einer Stirnseite 28 an einem Anlaufelement 32 an, das in radialer Montagerichtung 40 in das Gehäuseteil 16 montierbar ist. Die Stirnfläche 28 ist im Ausführungsbeispiel als Kugel 29 ausgebildet, die axial in die Schnecke 26 eingefügt ist. Das Anlaufelement 32 stützt sich über ein Dämpfungsmittel 36 am Gehäuseteil 16 ab. Das Dämpfungsmittel 36 ist beispielsweise als zylinderförmiges Dämpfungsgummi 37 ausgebildet, das ebenfalls in radialer Montagerichtung 40 montierbar ist. Das Anlaufelement 32 ist mittels eines separaten Befestigungselements 33 gegen ein Verschieben in radialer Richtung 40 gesichert. Das Befestigungselement 33 ist als Spannscheibe 34 ausgebildet, die beispielsweise kreisförmig ist und in ihrer Mitte eine Öffnung 35 aufweist, in die ein am Gehäuseteil 16 angeformter Zapfen 45 ragt. Der Zapfen 45 ist beispielsweise einstückig mit dem Gehäuseteil 16 als Kunststoff-Spritzgussteil gefertigt und erstreckt sich entgegen der Montagerichtung 40. An der inneren Öffnung 35 sind Federelemente 46 angeformt, mit denen das Befestigungselement 33 auf den Zapfen 45 festgeklemmt ist. Eine solche separat ausgebildete Spannscheibe 34 nach Art einer speed nut wird direkt mit dem radialen Einfügen in das Gehäuseteil 16 in diesem zuverlässig fixiert.

In einer alternativen Ausführung sind am äußeren Umfang 48 das Befestigungselement 33, Federelemente 46 angeordnet, mit denen sich das Befestigungselement an einer Umfangswand 50 des Gehäuseteils 16 verklemmt. Durch das separat montierbare Befestigungselement 33 wird sowohl das Anlaufelement 32 als auch das Dämpfungsmittel 36 in radialer Richtung in seiner Position gehalten, so dass im Betrieb der Getriebe-Antriebseinheit 10 beim Auftreten von axialen Stößen entlang der Achsrichtung 23 das Befestigungselement 33 nur entlang der Ankerwellenachse gedämpft verschoben wird. Dabei ist im Gehäuseteil 16 zusammen mit dem Befestigungselement 33 eine Führungsschiene 52 ausgebildet, in der sich das Anlaufelement 32 axial verschieben lässt. Dabei wird das Dämpfungsmittel 36 in axialer Richtung 23 zusammengedrückt und innerhalb einer näherungsweise quaderförmigen Aussparung 54 verformt. Dadurch können über die gesamte Lebensdauer der Antriebseinheit 10 stossartige Krafteinwirkungen gedämpft werden und das Axialspiel zuverlässig eleminiert werden. Durch die Anordnung des separat ausgebildeten Befestigungselements 33 ist oberhalb desselben entgegen der Montagerichtung 40 ein freier Bauraum 60 geschaffen, in den in beliebiger Weise Getriebe-Bauteile 13 des Getriebes 14 angeordnet werden können. Nach der radialen Montage der Getriebebauteile 13 wird das Gehäuseteil 16 mittels eines Getriebedeckels 17 verschlossen.

Fig. 2 zeigt eine Draufsicht auf die entsprechende Schnitt-Darstellung I-I gemäß Fig. 1. Dabei ist ein erstes Getriebezahnrad 42 bereits in das Gehäuseteil 16 eingesetzt und überträgt das Antriebsmoment mittels eines Ritzels 41 von der Schnecke 26 auf ein zweites Getriebezahnrad 44, an dem ein Abriebselement 56 ausgebildet ist. Das zweite Getrieberad 44 ist beispielsweise direkt im Gehäuseteil 16 und dem Getriebedeckel 17 gelagert und füllt den Bauraum 60 über dem Befestigungselement 33 aus. Dabei überlappt das Getrieberad 44 mit dem Anlaufelement 32 und dem Dämpfungsmittel 36, wobei durch das separat ausgebildete Befestigungselement 33 verhindert wird, dass sich das Anlaufelement 32 und das Dämpfungsmittel 36 in den Bauraum 60 der Getriebe-Bauteile 13 bewegen. Das Anlaufelement 32 ist in Fig. 2 schräg zur Ankerwellenachsrichtung 23 angeordnet, so dass die Anlauffläche 31 des Anlaufelements 32 einen Winkel 58 zur Ankerwellenachse 23 bildet, der kleiner ist als 90°. Der Winkel 58 beträgt beispielsweise 75° bis 85°, wobei die Führungsschiene 52 in diesem Ausführungsbeispiel entsprechend zur Achsrichtung 23 der Ankerwelle 22 geneigt ist. Wird bei einer axialen Belastung das Dämpfungsmittel 36 verformt, werden Ecken 55 der quaderförmigen Aussparungen 54 durch das Dämpfungsmittel 36 ausgefüllt, wodurch die Stossenergie gedämpft wird. In Fig. 2 ist gleichzeitig zu den Federelementen 46 an der inneren Öffnung 35 des Befestigungselements 33 eine alternative Anordnung der Federelemente 46 an einer äußeren Umfangswand 50 des Gehäuseteils 16 dargestellt. Wird beispielsweise auf die zentrale Öffnung 35 verzichtet, kann das separate Befestigungselement 33 beispielsweise auch eckig ausgebildet sein, wobei die Federelemente 46 an gegenüberliegenden Seiten des Umfangs 48 angeordnet sind, um das Befestigungselement 33 direkt in der Umfangswand 50 zu verspannen. Wird das Befestigungselement 33 jedoch über seine zentrale Öffnungen 35 auf dem Zapfen 45 fixiert, der unmittelbar neben dem Anlaufelement 32 und/oder dem Dämpfungsmittel 36 angeordnet ist, ist die zuverlässige Fixierung des Befestigungselements 33 unabhängig von den fertigungsbedingten Toleranzen der Umfangswand 50 gegeben. In einer weiteren Alternative kann das Anlaufelement 32 beispielsweise keilförmig oder einstückig zusammen mit dem Dämpfungsmittel 36 ausgebildet sein. Ebenso kann die Anlaufscheibe 32 das Dämpfungsmittel 36 in axialer Richtung 23 überlappen. Erfindungsgemäß dient dabei das separat montierbare Befestigungselement 33 auch zur radialen Fixierung des Anlaufelements 32 und/oder des Dämpfungsmittels 36.

Es sei angemerkt, dass hinsichtlich der in den Figuren und der Beschreibung dargestellten Ausführungsbeispiele vielfältige Kombinationsmöglichkeiten der einzelnen Merkmale untereinander möglich sind. So kann beispielsweise die konkrete Ausgestaltung des Befestigungselements 33 mit den Federelementen 46, das Anlaufelement 32, das Dämpfungsmittel 36 und die Ausformung der Stirnseite 28 entsprechend der Anwendung der Getriebe-Antriebseinheit 10 variiert werden. Bevorzugt findet die Erfindung Anwendung für Verstellantriebe im Kraftfahrzeug, insbesondere für die elektrische Sitzverstellung. Dabei ist das Abtriebselement 56 vorzugsweise als durchgehende Hohlwelle 57 ausgebildet, in die eine Antriebswelle einfügbar ist, die gleichzeitig synchron zwei Teile verstellen kann.

## Patentansprüche

1. Getriebe-Antriebseinheit (10) mit einem eine Ankerwelle (22) aufweisenden elektrischen Antriebsmotor (12) und einem diesem nachgeordneten Getriebe (14), insbesondere Schneckengetriebe, das mit dem Antriebsmotor (12) über die Ankerwelle (22) wirkverbunden ist, und die Ankerwelle (22) zumindest an einer ihrer Stirnseiten (28) über ein Anlaufelement (32) an einem Gehäuseteil (16) anliegt, wobei das Anlaufelement (32) radial zur Ankerwelle (22) in das Gehäuseteil (16) montierbar ist, wobei das Anlaufelement (32) mittels eines separat ausgebildeten Befestigungselements (33) gegen ein radiales Verschieben gesichert ist, **dadurch gekennzeichnet, dass** das Befestigungselement (33) als Spannscheibe (34) ausgebildet ist, die radial, montierbar ist und dass sich das Befestigungselement (33) mittels Federelementen (46) am Gehäuseteil (16) abstützt.

2. Getriebe-Antriebseinheit (10) nach Anspruch 1, **dadurch gekennzeichnet, dass** das Befestigungselement (33) separat montierbar ist.

3. Getriebe-Antriebseinheit (10) nach einem der Ansprüche 1 oder 2, **dadurch gekennzeichnet, dass** das Befestigungselement (33) ein radial montierbares Dämpfungsmittel (36) in radialer Montagerichtung (40) gegen das Gehäuseteil (16) drückt.

4. Getriebe-Antriebseinheit (10) nach einem der vorgehenden Ansprüche, **dadurch gekennzeichnet, dass** am äußeren Umfang (48) des Befestigungselements (33) Federelemente (46) angeordnet sind, mit denen sich das Befestigungselement (33) an einer Umfangswand (50) des Gehäuseteils (16) verklemmt.

5. Getriebe-Antriebseinheit (10) nach einem der vorgehenden Ansprüche, **dadurch gekennzeichnet, dass** sich am Gehäuseteil (16) ein Zapfen (45) in Montagerichtung (40) erstreckt, auf dem das Befestigungselement (33) mit einer zentralen Öffnung (35) festgeklemmt ist

6. Getriebe-Antriebseinheit (10) nach Anspruch 3, **dadurch gekennzeichnet, dass** das Befestigungselement (33), die Anlaufscheibe (32) und das Dämpfungsmittel (36) teilweise oder vollständig überdeckt, und die zentrale Öffnung (35) unmittelbar neben der Anlaufscheibe (32) und dem Dämpfungsmittel (36) angeordnet ist.

7. Getriebe-Antriebseinheit (10) nach Anspruch 3, **dadurch gekennzeichnet, dass** das Dämpfungselement (36) zylinderförmig ausgebildet ist und unter axialer Vorspannung durch das Anlaufelement (32) in eine quaderförmige Aussparung (54) des Gehäuseteils (16) gepresst ist.

8. Getriebe-Antriebseinheit (10) nach einem der vorgehenden Ansprüche, **dadurch gekennzeichnet, dass** das Anlaufelement (32) mit seiner Anlauffläche (31) einen Winkel (58) kleiner als 90° - insbesondere 75 - 85° - zur Axialrichtung (23) bildet.

9. Getriebe-Antriebseinheit (10) nach einem der vorgehenden Ansprüche, **dadurch gekennzeichnet, dass** entgegen der Montagerichtung (40) innerhalb des Gehäuseteils (16) über dem Befestigungselement (33) ein Getrieberad (44) des Getriebes (14) angeordnet ist.

10. Getriebe-Antriebseinheit (10) nach einem der vorgehenden Ansprüche, **dadurch gekennzeichnet, dass** zwischen dem Befestigungselement (33) und einem das Gehäuseteil (16) abschließenden Gehäusedeckel (17) ein Gehäuseinnenraum (60) ausgebildet ist, in dem insbesondere das Getrieberad (44) angeordnet ist.

11. Verfahren zur Herstellung einer Getriebe-Antriebseinheit (10) nach einem der vorgehenden Ansprüche, bei dem eine Ankerwelle (12) mit einer Stirnseite (28, 30) über ein Anlaufelement (32) an einem Gehäuseteil (16) angelegt wird, **dadurch gekennzeichnet, dass**
- zuerst das Anlaufelement (32) radial zur Ankerwelle (12) in das Gehäuseteil (16) eingefügt wird,
- danach das Anlaufelement (32) mittels eines separaten Befestigungselements (33), das als radial montierbare Spannscheibe (34) ausgebildet ist, radial fixiert wird, und das Befestigungselement (33) beim radialen Einfügen in das Gehäuseteil (16) mittels angeformten Federelementen (46) am Gehäuseteil (16) verspannt wird,
- danach über dem Befestigungselement (33) ein Getrieberad (44) angeordnet wird, das über eine weitere Getriebestufe (41) mit einer Schnecke (26) in Eingriff steht, die auf der Ankerwelle (22) angeordnet ist.

12. Verfahren nach Anspruch 11, **dadurch gekennzeichnet, dass** vor dem Einbau des Befestigungselements (33) ein axial am Anlaufelement (32) anliegendes Dämpfungsmittel (16) radial in eine Aussparung (54) des Gehäuseteils (16) eingefügt wird, derart, dass das Befestigungselement (33) sowohl das Anlaufelement (32) als auch das Dämpfungsmittel (36) radial fixiert.

## Claims

1. Gear mechanism/drive unit (10) with an electric drive motor (12) which has an armature shaft (22), and with a gear mechanism (14), in particular a worm gear mechanism, which is arranged downstream of it and is operatively connected to the drive motor (22) via the armature shaft (22), and, at least on one of its end sides (28), the armature shaft (22) bears against a housing part (16) via a thrust element (32), it being possible for the thrust element (32) to be mounted into the housing part (16) radially with respect to the armature shaft (22), the thrust element (32) being secured against radial displacement by means of a separately configured fastening element (33), **characterized in that** the fastening element (33) is configured as a clamping disc (34) which can be mounted radially, and **in that** the fastening element (33) is supported on the housing part (16) by means of spring elements (46).

2. Gear mechanism/drive unit (10) according to Claim 1, **characterized in that** the fastening element (33) can be mounted separately.

3. Gear mechanism/drive unit (10) according to either of Claims 1 and 2, **characterized in that** the fastening element (33) presses a radially mountable damping means (36) in the radial mounting direction (40) against the housing part (16).

4. Gear mechanism/drive unit (10) according to one of the preceding claims, **characterized in that** spring elements (46) are arranged on the outer circumference (48) of the fastening element (33), by way of which spring elements (46) the fastening element (33) is braced on a circumferential wall (50) of the housing part (16).

5. Gear mechanism/drive unit (10) according to one of the preceding claims, **characterized in that** a pin (45) extends on the housing part (16) in the mounting direction (40), on which pin (45) the fastening element (33) is clamped fixedly by way of a central opening (35).

6. Gear mechanism/drive unit (10) according to Claim 3, **characterized in that** the fastening element (33), the thrust disc (32) and the damping means (36) overlap partially or completely, and the central opening (35) is arranged directly next to the thrust disc (32) and the damping means (36).

7. Gear mechanism/drive unit (10) according to Claim 3, **characterized in that** the damping element (36) is of cylindrical configuration and is pressed into a cuboid-shaped cut-out (54) of the housing part (16) under axial prestress by way of the thrust element (32).

8. Gear mechanism/drive unit (10) according to one of the preceding claims, **characterized in that** the thrust element (32) with its thrust face (31) forms an angle (58) of less than 90°, in particular from 75 to 85°, with respect to the axial direction (23).

9. Gear mechanism/drive unit (10) according to one of the preceding claims, **characterized in that** a gear mechanism gear (44) of the gear mechanism (14) is arranged within the housing part (16) above the fastening element (33) counter to the mounting direction (40).

10. Gear mechanism/drive unit (10) according to one of the preceding claims, **characterized in that** a housing interior space (60) is configured between the fastening element (33) and a housing cover (17) which closes the housing part (16), in which housing interior space (60), in particular, the gear mechanism gear (44) is arranged.

11. Method for producing a gear mechanism/drive unit (10) according to one of the preceding claims, in which method an armature shaft (12) is brought into contact with a housing part (16) by way of an end side (28, 30) via a thrust element (32), **characterized in that**,
- first of all, the thrust element (32) is inserted into the housing part (16) radially with respect to the armature shaft (12),
- subsequently, the thrust element (32) is fixed radially by means of a separate fastening element (33) which is configured as a radially mountable clamping disc (34), and the fastening element (33) is braced on the housing part (16) by means of integrally formed spring elements (46) during the radial insertion into the housing part (16),
- subsequently, a gear mechanism gear (44) is arranged above the fastening element (33), which gear mechanism gear (44) is in engagement via a further gear mechanism stage (41) with a worm (26) which is arranged on the armature shaft (22).

12. Method according to Claim 11, **characterized in that**, before the installation of the fastening element (33), a damping means (16) which bears axially against the thrust element (32) is inserted radially into a cut-out (54) of the housing part (16) in such a way that the fastening element (33) radially fixes both the thrust element (32) and the damping means (36).

## Revendications

1. Unité d'entraînement de transmission (10) comprenant un moteur d'entraînement électrique (12) présentant un arbre d'induit (22) et une transmission (14) associée à celui-ci, en particulier une transmission à vis sans fin, qui est en liaison fonctionnelle avec le moteur d'entraînement (12) par le biais de l'arbre d'induit (22), et l'arbre d'induit (22) s'appliquant au moins au niveau de l'un de ses côtés frontaux (28) par le biais d'un élément de butée (32) contre une partie de boîtier (16), l'élément de butée (32) pouvant être monté radialement par rapport à l'arbre d'induit (22) dans la partie de boîtier (16), l'élément de butée (32) étant fixé à l'encontre d'un coulissement radial au moyen d'un élément de fixation réalisé séparément (33), **caractérisée en ce que** l'élément de fixation (33) est réalisé sous forme de disque de serrage (34) qui peut être monté radialement et **en ce que** l'élément de fixation (33) s'appuie au moyen d'éléments de ressort (46) contre la partie de boîtier (16).

2. Unité d'entraînement de transmission (10) selon la revendication 1, **caractérisée en ce que** l'élément de fixation (33) peut être monté séparément.

3. Unité d'entraînement de transmission (10) selon l'une quelconque des revendications 1 ou 2, **caractérisée en ce que** l'élément de fixation (33) presse un moyen d'amortissement (36) pouvant être monté radialement dans la direction de montage radiale (40) contre la partie de boîtier (16).

4. Unité d'entraînement de transmission (10) selon l'une quelconque des revendications précédentes, **caractérisée en ce que** des éléments de ressort (46) sont disposés au niveau de la périphérie extérieure (48) de l'élément de fixation (33), avec lesquels l'élément de fixation (33) se cale au niveau d'une paroi périphérique (50) de la partie de boîtier (16).

5. Unité d'entraînement de transmission (10) selon l'une quelconque des revendications précédentes, **caractérisée en ce qu'**un tourillon (45) s'étend dans la direction de montage (40) sur la partie de boîtier (16), sur lequel l'élément de fixation (33) est serré fixement avec une ouverture centrale (35).

6. Unité d'entraînement de transmission (10) selon la revendication 3, **caractérisée en ce que** l'élément de fixation (33) recouvre partiellement ou complètement le disque de butée (32) et le moyen d'amortissement (36), et l'ouverture centrale (35) est disposée directement à côté du disque de butée (32) et du moyen d'amortissement (36).

7. Unité d'entraînement de transmission (10) selon la revendication 3, **caractérisée en ce que** l'élément d'amortissement (36) est réalisé sous forme cylindrique et est pressé avec précontrainte axiale par l'élément de butée (32) dans un évidement de forme parallélépipédique (54) de la partie de boîtier (16).

8. Unité d'entraînement de transmission (10) selon l'une quelconque des revendications précédentes, **caractérisée en ce que** l'élément de butée (32) forme avec sa surface de butée (31) un angle (58) inférieur à 90° - en particulier de 75 à 85° - par rapport à la direction axiale (23).

9. Unité d'entraînement de transmission (10) selon l'une quelconque des revendications précédentes, **caractérisée en ce qu'**une roue d'engrenage (44) de la transmission (14) est disposée dans le sens opposé à la direction de montage (40) à l'intérieur de la partie de boîtier (16) par-dessus l'élément de fixation (33).

10. Unité d'entraînement de transmission (10) selon l'une quelconque des revendications précédentes, **caractérisée en ce qu'**entre l'élément de fixation (33) et un couvercle de boîtier (17) fermant la partie de boîtier (16) est réalisé un espace interne de boîtier (60) dans lequel est notamment disposée la roue d'engrenage (44).

11. Procédé de fabrication d'une unité d'entraînement de transmission (10) selon l'une quelconque des revendications précédentes, dans lequel un arbre d'induit (12) est appliqué avec un côté frontal (28, 30) par le biais d'un élément de butée (32) contre une partie de boîtier (16),
**caractérisé en ce que**
- premièrement l'élément de butée (32) est introduit radialement par rapport à l'arbre d'induit (12) dans la partie de boîtier (16),
- ensuite l'élément de butée (32) est fixé radialement au moyen d'un élément de fixation séparé (33) qui est réalisé sous forme de disque de serrage pouvant être monté radialement (34), et l'élément de fixation (33), lors de l'insertion radiale dans la partie de boîtier (16), étant serré sur la partie de boîtier (16) au moyen d'éléments de ressort façonnés (46),
- puis une roue de transmission (44) est disposée au-dessus de l'élément de fixation (33), laquelle est en prise par le biais d'un étage de transmission supplémentaire (41) avec une vis sans fin (26) qui est disposée sur l'arbre d'induit (22).

12. Procédé selon la revendication 11, **caractérisé en ce qu'**avant l'installation de l'élément de fixation (33), un moyen d'amortissement (16) s'appliquant axialement contre l'élément de butée (32) est introduit radialement dans un évidement (54) de la partie de boîtier (16) de telle sorte que l'élément de fixation (33) fixe radialement à la fois l'élément de butée (32) et le moyen d'amortissement (36).
